# EUROPEAN PATENT APPLICATION

(11) **EP 4 421 969 A1**
(43) Date of publication of application: **28.08.2024**
(21) Application number: 23824170.7
(22) Date of filing: 12.06.2023
(51) Int. Cl.: H01M 50/531, H01M 50/553, H01M 50/15, H01M 50/103

(54) **SECONDARY BATTERY HAVING IMPROVED TERMINAL STRUCTURE**

(30) Priority: 16.06.2022 KR 20220073694
(71) Applicant: LG Energy Solution, Ltd., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/007995
(87) International publication number: WO 2023/243953

(57) **Abstract**

Disclosed herein relates to a secondary battery, including: an electrode assembly; a battery case; a positive terminal and a negative terminal spaced apart on a top surface of the battery case; and at least one of a W-type terminal structure and a T-type terminal structure, wherein the W-type terminal structure is a structure capable of connecting two secondary batteries in a width direction, and the T-type terminal structure is a structure capable of connecting two secondary batteries in a thickness direction.

## Description

### [Cross-Reference to Related Applications]

This application is a National Phase of International Application No. PCT/KR2023/007995, filed on June 12, 2023, and claims the benefit of and priority to Korean Patent Application No. 10-2022-0073694, filed on June 16, 2022, the disclosures of which are incorporated by reference in their entirety for all purposes as if fully set forth herein.

### [Technical Field]

The present disclosure relates to a secondary battery, a prismatic secondary battery having an improved terminal structure, wherein the arrangement structure of the positive and/or negative terminals can be easily changed, and various electrical connections to a plurality of secondary batteries can be easily realized.

### [Background]

Unlike primary batteries, secondary batteries are rechargeable and have been extensively researched and developed recently due to potential for miniaturization and high capacity applications. With the increasing technological advancements and demand for mobile devices, as well as the growing prominence of electric vehicles and energy storage systems in response to environmental concerns, the demand for secondary batteries as an energy source is rapidly increasing.

Depending on the shape of the battery case, secondary batteries are classified into coin-type batteries, cylindrical batteries, prismatic batteries, and pouch-type batteries. An electrode assembly, which is installed inside the battery case in secondary batteries, is a power generation element capable of charge and discharge. It has a laminated structure of electrodes and separators.

Electrode assemblies can be broadly categorized into three types: a Jellyroll type, which involves winding a positive electrode and a negative electrode of an active material-coated sheet with a separator interposed therebetween; a stack type, where a plurality of positive electrodes and negative electrodes are sequentially stacked with a separator interposed therebetween; and a Stack & Folding type, where unit cells of a stack type are wound with a long separator film.

When looking at prismatic secondary batteries among various types of secondary batteries, it is common for the positive and negative terminals to be arranged together on one side or to be placed on opposite sides. The placement of these terminals is determined by the design specifications of various devices that use prismatic secondary batteries. Adhering to these design specifications, the arrangement of the positive and negative terminals must be separately designed each time, even within the same form factor, which can be quite labor-intensive.

In addition, to assemble a plurality of secondary batteries into modules or packs, electrical connections like busbars are required, and designing these busbars can also be complicated because it depends on the arrangement structure of the positive and negative terminals.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

The present disclosure aims to provide a new prismatic secondary battery that can easily change the arrangement structure of the positive and negative terminals provided in the prismatic secondary battery without any design changes, and furthermore, to provide a new prismatic secondary battery that can easily realize various electrical connection structures for a plurality of secondary batteries.

However, the technical problems that the present disclosure seeks to address are not limited to those described above, and other challenges not mentioned will be apparent to those of ordinary skill in the art from the following description of the invention.

### [Technical Solution]

The present disclosure relates to a secondary battery, including: an electrode assembly; a battery case; a positive terminal and a negative terminal spaced apart on a top surface of the battery case; and at least one of a W-type terminal structure and a T-type terminal structure, wherein the W-type terminal structure is a structure capable of connecting two secondary batteries in a width direction, the W-type terminal structure including a first terminal body coupled to the top surface of the battery case and one or more faces extending from the top surface while covering the positive or negative terminal, and a first extension terminal electrically connected to the positive or negative terminal and exposed on any one side of the terminal body other than the top surface, and having a binding member on the first extension terminal, and wherein the T-type terminal structure is a structure capable of connecting two secondary batteries in a thickness direction, the T-type terminal structure including a second terminal body coupled to the top surface of the battery case and one or more faces extending from the top surface while covering the positive or negative terminal, and a second extension terminal electrically connected to the positive or negative terminals and exposed on any one side of the terminal body other than the top surface, and having a connection terminal facing the thickness direction of the secondary battery on the second extension terminal.

Here, the first extension terminal or second extension terminal may be electrically connected to the positive terminal or negative terminal by an extension wire, which is insulated from outside.

In one exemplary embodiment of the present disclosure, the first terminal body or the second terminal body may be coupled to the top surface of the battery case and a side surface extending from the top surface, and wherein the first extension terminal or the second extension terminal may be exposed on the side surface.

In addition, the binding member may be a male binding member or a female binding member having a shape complementary to the male binding member provided on the first extension terminal.

Accordingly, the male binding member or the female binding member provided on the first extension terminal may be configured to bound in series circuit to a female binding member or a male binding member of another adjacent secondary battery.

For example, the secondary battery and the another adjacent secondary battery are aligned in the width direction, and wherein the male binding member and the female binding member provided in the secondary battery and the another adjacent secondary battery may be coupled along the width direction.

In such exemplary embodiment, the female binding member may include a groove open in the width direction, and the male binding member may include a protrusion projecting in the width direction.

Or, the secondary battery and the another adjacent battery are aligned in the width direction, and wherein the male binding member and the female binding member provided in the secondary battery and the another adjacent secondary battery may be coupled along a height direction of the secondary battery.

In such exemplary embodiment, the female binding member may include a slot open in the height direction, and the male binding member may include an insert extended in the height direction.

Meanwhile, the connection terminal may extend in one or both directions along the thickness direction.

The connection terminal on the second extension terminal may be configured to electrically connect to a second extension terminal or connection terminal of another adjacent secondary battery.

For example, the secondary battery and the another adjacent secondary battery may be aligned in the thickness direction, and wherein the connection terminal provided on the secondary battery may be connected in series or parallel to a second extension terminal or connection terminal of the another adjacent secondary battery.

Additionally, an end of the connection terminal may form a slot open in the thickness direction.

Also, the slot of the connection terminal may be configured to be electrically connected by inserting a connection terminal of an another adjacent secondary battery into the slot.

In one exemplary embodiment of the present disclosure, the secondary battery may comprise a plurality of secondary batteries arranged in the width direction, which are provided with a plurality of series battery groups connected in series by the binding members of the W-type terminal structure, and wherein the secondary batteries located at the outermost edge of the plurality of series battery groups may be connected in parallel by the connection terminal of the T-type terminal structure.

Or, the secondary battery comprises a plurality of secondary batteries arranged in the thickness direction, which are provided with a plurality of parallel battery groups connected in parallel by the connection terminal of the T-type terminal structure, and wherein the plurality of parallel battery groups may be connected in parallel by the connection terminal of the T-type terminal structure.

### [Advantageous Effects]

The secondary battery of the present disclosure with the above configuration can easily change the arrangement structure of the positive and/or negative terminals by coupling the terminal structure to a corner portion of the top surface of the secondary battery. Thus, it is possible to reduce the development and production costs of prismatic secondary batteries by controlling the position of the terminals freely without affecting the existing internal cell manufacturing process.

In addition, by providing a binding member or connection terminal on the terminal structure, it is possible to directly connect the terminal structure to each other without a separate busbar when connecting a plurality of secondary cells in a series, parallel, or series-parallel circuit along the width direction and/or thickness direction, thereby simplifying the structure and reducing the manufacturing cost when manufacturing a battery module or pack.

However, the technical effects of the present disclosure are not limited to those described above, and other effects not mentioned will be apparent to one of ordinary skill in the art from the following description of the invention.

### [Brief Description of the Drawings]

The following drawings accompanying this specification illustrate preferred exemplary embodiments of the present disclosure and are intended to serve as a further understanding of the technical ideas of the present disclosure in conjunction with the detailed description of the invention that follows, so the present disclosure is not to be construed as limited to what is shown in such drawings.
FIG. 1 is a perspective view of an example of a secondary battery according to the present disclosure.
FIG. 2 is a perspective view of a coupled structure of a secondary battery and a W-type terminal structure according to the present disclosure.
FIGS. 3 and 4 are diagrams illustrating an exemplary embodiment of a female binding member and a male binding member.
FIG. 5 is a diagram illustrating a structure in which two secondary batteries are electrically connected to each other via a binding member.
FIG. 6 is a diagram illustrating a female binding member and a male binding member according to another exemplary embodiment of the present disclosure.
FIGS. 7 and 8 are diagrams illustrating a structure in which a plurality of secondary batteries are electrically connected using the binding member of FIG. 6.
FIG. 9 is a perspective view illustrating another example of a secondary battery according to the present disclosure.
FIG. 10 is a perspective view of a coupled structure of a secondary battery and a T-type terminal structure according to the present disclosure.
FIG. 11 is a diagram illustrating various exemplary embodiments of a connection terminal.
FIG. 12 is a diagram illustrating a structure in which two secondary batteries are connected in parallel through a connection terminal.
FIG. 13 is a diagram illustrating a structure in which three secondary batteries are connected in series through a connection terminal.
FIG. 14 is a diagram illustrating a connection terminal according to another exemplary embodiment of the present disclosure.
FIG. 15 is a diagram illustrating a structure in which a plurality of secondary batteries is electrically connected using the connection terminal of FIG. 14.
FIG. 16 is a diagram illustrating an example of connecting a plurality of secondary batteries in series and parallel using a W-type terminal structure and a T-type terminal structure.
FIG. 17 is a diagram illustrating an example of a series-parallel connection using a T-type terminal structure.

### [Detailed Description]

The present disclosure may have various modifications and various examples, and specific examples are illustrated in the drawings and described in detail in the description.

However, it should be understood that the present disclosure is not limited to specific embodiments, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a secondary battery, specifically to a secondary battery with spaced positive and negative terminals on the top surface of a cell case that forms a hexagonal shape.

In one example, a secondary battery according to the present disclosure has a terminal structure coupled to at least one top surface edge of the battery case. The terminal structure includes a terminal body coupled to a top surface of the battery case and one or more surfaces leading up to the top surface while enclosing a positive or negative terminal from being exposed, and an extension terminal electrically connected to the positive or negative terminal and exposed on any one side of the terminal body except the top surface.

Here, the secondary battery of the present disclosure includes two types of terminal structures.

The first type is a W-type terminal structure, which is capable of connecting two secondary batteries in a width direction. The W-type terminal structure includes a binding member provided on an extension terminal. The binding member is a member directly connecting the extension terminals of the terminal structure facing each other in the width direction, so that a plurality of secondary batteries can be electrically connected in turn along the width direction by the binding member.

The second type is a T-type terminal structure, which is capable of connecting two secondary batteries in a thickness direction. The T-type terminal structure includes a connection terminal on the extension terminal facing the thickness direction of the secondary battery. The connection terminal is an extended terminal that electrically connects the extension terminal of the terminal structure with each of the secondary batteries aligned in the thickness direction, such that a plurality of secondary batteries can be electrically connected along the thickness direction by the connection terminal.

As such, in the secondary battery of the present disclosure including the terminal structure, the position of the positive and negative terminals arranged on the top surface of the battery case can be freely changed to meet the needs of the user without any design changes by simply applying the terminal structure, thereby reducing the production cost of the prismatic secondary battery.

In addition, by providing two types of terminal structures with a binding member and a connection terminal on the extension terminal, it is possible to directly connect the terminal structures without a separate busbar when configuring a plurality of secondary batteries into various types of series, parallel, and series-parallel circuits along the width and/or thickness direction, thereby simplifying the structure and reducing manufacturing costs when manufacturing battery modules or packs.

Hereinafter, specific embodiments of the present disclosure will be described in detail with reference to the accompanying drawings. For reference, the directions of front, back, up, down, left, and right used in the following description to designate relative positions are intended to aid in the understanding of the invention, and refer to the directions shown in the drawings unless otherwise specified.

### (First Embodiment)

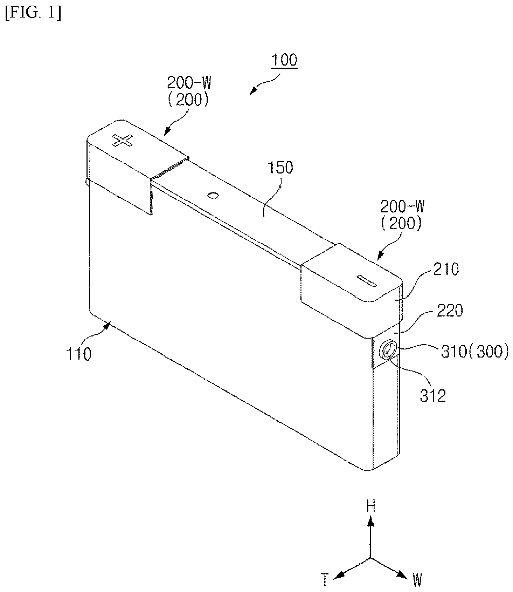

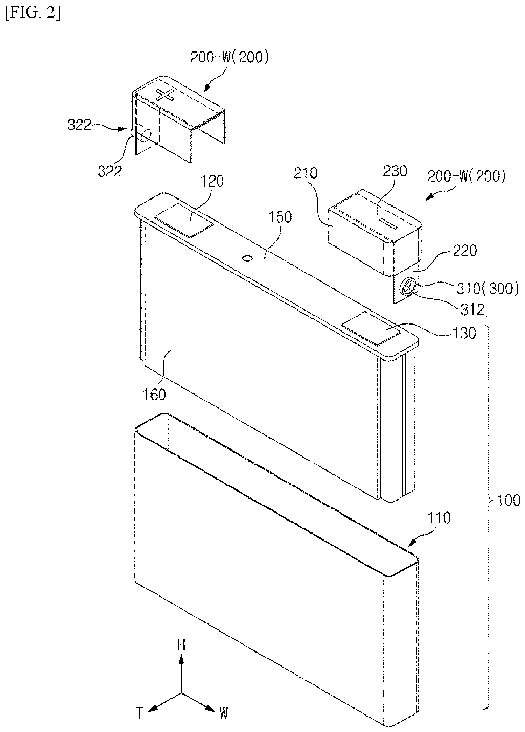

FIG. 1 is a perspective view of a secondary battery 100 according to the present disclosure, and FIG. 2 is a perspective view of a coupled structure of a secondary battery 100 and a terminal structure 200 according to the present disclosure.

The secondary battery 100 of the present disclosure includes two types of terminal structures 200: a W-type terminal structure 200-W and a T-type terminal structure 200-T. The basic structure of the W-type terminal structure 200-W and the T-type terminal structure 200-T are very similar. Therefore, in the first embodiment, the W-type terminal structure 200-W will be described, followed by the T-type terminal structure 200-T and combinations thereof. For reference, the term terminal structure 200 will be used herein to refer to both W-type terminal structure 200-W and T-type terminal structure 200-T when describing their common configurations, and W-type terminal structure 200-W and T-type terminal structure 200-T will be used separately when describing their distinct configurations.

Referring to FIGS. 1 and 2, the present disclosure relates to a secondary battery 100, and in particular to a prismatic secondary battery 100 having a positive terminal 120 and a negative terminal 130 spaced apart on a top surface of a battery case 110 forming a hexahedral shape. Here, the prismatic secondary battery 100 illustrated in the drawings is an example, and the ratio of width to length and height may vary. However, for ease of explanation, reference will be made to the orientations of front to back and top to bottom with reference to the accompanying drawings. For example, a side on which the positive terminal 120 and the negative terminal 130 are disposed is called the top surface, and the opposite side facing it is called the bottom surface.

Further, the coordinate axes shown in FIGS. 1 and 2 designate a width direction W, a thickness direction T, and a height direction H of the secondary battery 100. The width direction W designates a direction across the positive terminal 120 and the negative terminal 130, the thickness direction T designates a depth direction (relative to the ground) perpendicular to the width direction W, and the height direction H designates a direction perpendicular to both the width direction W and the thickness direction T.

The secondary battery 100 of the present disclosure includes a terminal structure 200. The terminal structure 200 is a hinge-like structure that couples to at least one top corner of the battery case 110, and includes a terminal body 210 and an extension terminal 220.

The terminal body 210 refers to a body of the terminal structure 200 coupled to the top surface of the battery case 110 and one or more surfaces (such as a side, front, rear, etc.) extending from the top surface while enclosing the positive terminal 120 or the negative terminal 130 from being exposed to the outside.

The extension terminal 220 refers to a terminal of the terminal structure 200 that is electrically connected to the anode terminal 120 or cathode terminal 130, but is exposed on any side of the terminal body 210 other than the top side. In other words, the positive terminal 120 and negative terminal 130 are enclosed by the terminal body 210 and not exposed, so the extension terminal 220 functions as a new positive terminal 120 and negative terminal 130 located on a surface other than the top surface.

Therefore, the secondary battery 100 of the present disclosure can freely change the positions of the positive terminal 120 and the negative terminal 130 disposed on the top surface of the battery case 110 without any design changes by simply applying the terminal structure 200. Accordingly, the present disclosure can easily change the positions of the positive terminal 120 and the negative terminal 130 using the terminal structure 200 for the prismatic secondary battery 100 of the same form factor, thereby reducing the production cost of the prismatic secondary battery 100.

Here, the W-type terminal structure 200-W includes a binding member 300 provided on the extension terminal 220. The binding member 300 is a member directly connecting the extension terminals 220 of the terminal structure 200 facing each other along the width direction W, and a plurality of secondary batteries 100 can be electrically connected by the binding member 300.

As such, by providing the W-type terminal structure 200-W with the binding member 300, it is possible to directly connect the W-type terminal structures 200-W, so that a plurality of secondary batteries 100 can be electrically connected to each other by directly connecting the binding members 300 without a separate busbar, thereby simplifying the structure and reducing the manufacturing cost when manufacturing a battery module or pack.

In one exemplary embodiment of the present disclosure, the positive terminal 120 or negative terminal 130 and the extension terminal 220 are electrically connected via an extension wire 230, which is not exposed to the outside of the terminal body 210. Further, the extension wire 230 is insulated from the outside. For example, the extension wire 230 and the extension terminal 220 may be embedded in the terminal body 210 of an insulating resin material, such as by insert molding. This prevents the extension wire 230 from being damaged, shorted, or the like by leaving only the extension terminal 220 exposed to the outside. Note that the extension wire 230 and the extension terminal 220 may be integrally constructed, or may be separate parts that are coupled to the terminal body 210.

According to the specific embodiment shown, the terminal body 210 is coupled to the top surface of the battery case 110 and a side surface extending from the top surface, and the extension terminal 220 is exposed on the side surface. Accordingly, the position of the positive terminal 120 or the negative terminal 130, which was located on the top surface of the battery case 110, is moved to the side.

Furthermore, the terminal structure 200 may be coupled to the positive terminal 120 and the negative terminal 130 one by one, whereby the positive terminal 120 and the negative terminal 130 are disposed one by one on sides opposite to each other. In other words, the positive terminal 120 and the negative terminal 130, which were disposed together on the top surface of the battery case 110, are moved to adjacent sides respectively, and the initial prismatic secondary battery 100, which was designed as a unidirectional secondary battery, is changed to a bidirectional secondary battery.

In addition, the terminal structure 200 can then be further attached to the completed secondary battery 100, or alternatively, as shown in FIG. 2, the terminal structure 200 can be manufactured by first coupling the terminal structure 200 to the cap plate 150 that comprises the top surface of the battery case 110 prior to enclosing the electrode assembly 160 in the battery case 110.

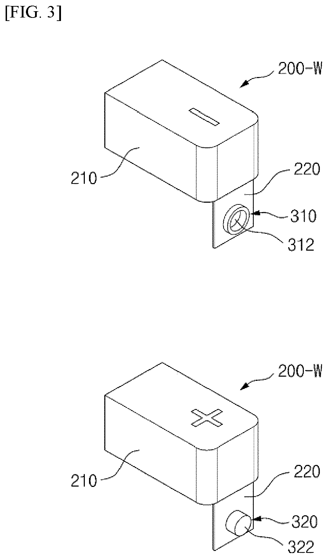

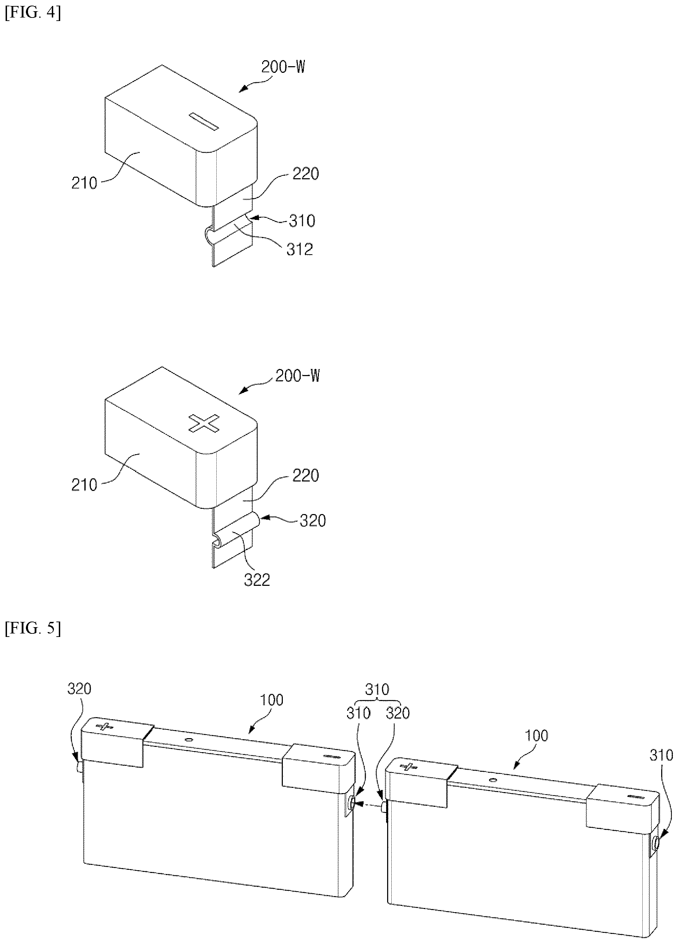

FIGS. 3 and 4 are diagrams illustrating a binding member 300 provided in the W-type terminal structure 200-W. In one exemplary embodiment of the present disclosure, the binding member 300 is provided with two types: a female binding member 310 and a male binding member 320. The female binding member 310 and the male binding member 320 are complementary to each other, i.e., they have a male and female shape that can be fit in together.

In one exemplary embodiment of the binding member 300 shown in FIG. 3, the female binding member 310 is shaped in the form of a groove 312 and the male binding member 320 is shaped in the form of a protrusion 322 that fits into the groove 312 of the female binding member 310. In the diagrams, the groove 312 and protrusion 322 are circular in cross-section, but the shape of the groove 312 and projection 322 is not limited by these diagrams.

The exemplary embodiment of FIG. 4 illustrates a case in which the grooves 312 and protrusions 322 form an open shape rather than a closed shape. In particular, the groove 312 of the female binding member 310 and the protrusion 322 of the male binding member 320 in FIG. 4 are shaped in a way that can be made by bending a flat plate, and the cross-section forms a dovetail structure, which is characterized in that it can be elastically bound by spring action to exert a strong clamping force.

Here, in the binding member 300 shown in FIGS. 3 and 4, the female binding member 310 includes a groove 312 open in the width direction W, and the male binding member 320 includes a protrusion 322 protruding in the width direction W. In other words, the female binding member 310 and the male binding member 320 can be engaged and disengaged along the width direction W. In this sense, the terminal structure 200 of the first embodiment is referred to as a W-type terminal structure 200-W.

FIG. 5 illustrates a configuration in which two secondary batteries 100 are interconnected via a binding member 300 provided on their respective extension terminals 220. The binding members 300 are electrically connected to the extension terminals 220, so that when the plurality of secondary batteries 100 are connected to each other across the binding members 300, the plurality of secondary batteries 100 are electrically connected to each other. The binding member 300 may be manufactured as a separate member and bonded to the extension terminal 220, or the binding member 300 may be integrally formed with the extension terminal 220 as shown in the illustrated embodiment.

Referring again to FIG. 5, as the female binding member 310 and the male binding member 320 can be engaged and disengaged along the width direction W, the two secondary batteries 100 are also connected to each other along the width direction W. As such, since the plurality of secondary batteries 100 may be connected one after another along the width direction W, the plurality of secondary batteries 100 must be connected in series to form an electrical circuit. Therefore, if the negative terminal 130 of one secondary battery 100 is provided with a female binding member 310, or more precisely, if the extension 220 connected to the negative terminal 130 is provided with a female binding member 310, the positive terminal 120 of another adjacent secondary battery 100 should be provided with a male binding member 320. In other words, in the adjacent secondary batteries 100, terminals of different polarities should be provided with binding members 300 having different male/female properties.

However, this combination of binding members 300 does not necessarily limit any one secondary battery 100 to having one female binding member 310 and one male binding member 320. Of course, while it is common for all of the secondary batteries 100 to have the same male/female pattern of terminals of the same polarity, it is also possible to configure the secondary batteries 100 such that some of the secondary batteries 100 have only female binding members 310 while others have only male binding members 320. In other words, a plurality of secondary batteries 100 may be connected in series along the width direction W, as long as the terminals of adjacent secondary batteries 100 with different polarities are provided with binding members 300 with different male/female properties.

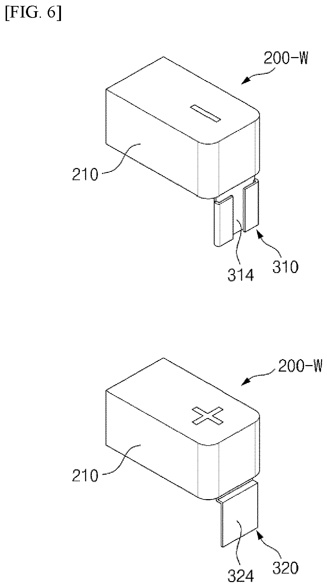

FIG. 6 is a diagram illustrating another exemplary embodiment of the female binding member 310 and the male binding member 320.

The embodiment of FIG. 6 is the same as the previous embodiment in that a plurality of secondary batteries 100 can be connected in series along the width direction W through the W-type terminal structure 200-W, but there is a difference in the structure of interconnecting the female binding member 310 and the male binding member 320.

In the embodiment shown in FIGS. 1 through 5, the groove 312 of the female binding member 310 and the protrusion 322 of the male binding member 320 face in the width direction W, and thus the direction of the female-male coupling is in the width direction W of the secondary battery 100.

In comparison, in the embodiment of FIG. 6, the female binding member 310 includes a slot 314 open in the height direction H, and the male binding member 320 includes an insert 324 extending in the height direction H. In other words, in the embodiment of FIG. 6, a plurality of secondary batteries 100 are sequentially connected along the width direction W, but the female binding members 310 and male binding members 320 of adjacent secondary batteries 100 are engaged and disengaged along the height direction H.

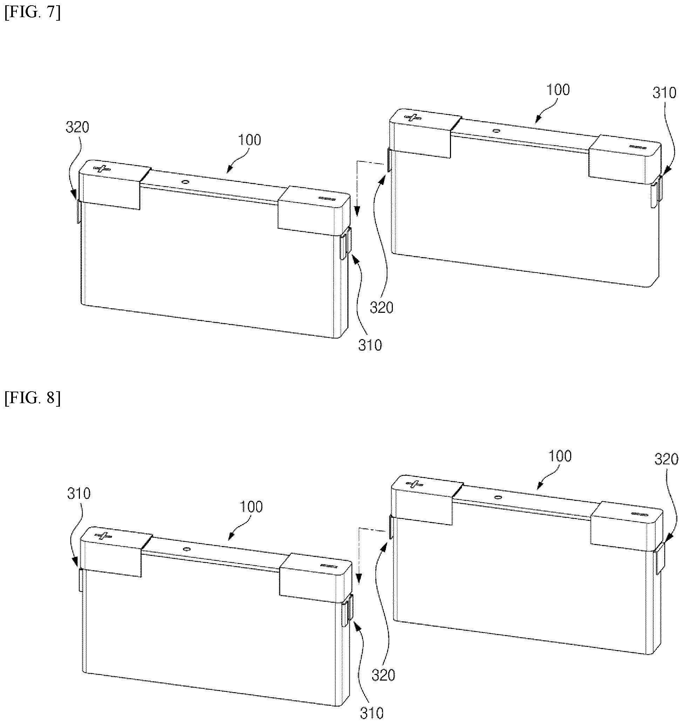

FIGS. 7 and 8 illustrate a structure in which a plurality of secondary batteries 100 are electrically connected using the binding member 300 of FIG. 6.

FIGS. 7 and 8 illustrate a configuration in which two secondary batteries 100 are interconnected by being male and female coupled in the height direction H via binding members 300 provided on their respective extension terminals 220. As with the embodiments of FIGS. 1 through 5, the binding members 300 are electrically connected to the extension terminals 220, so that when the plurality of secondary batteries 100 are interconnected through the binding members 300, the plurality of secondary batteries 100 are electrically connected to each other.

In particular, according to the binding member 300 of FIG. 6, the female binding member 310 and the male binding member 320 of the adjacent secondary battery 100 are engaged and disengaged along the height direction H, so that the female binding member 310 and the male binding member 320, once engaged, cannot be disengaged in the width direction W. Therefore, there is little concern that the engaged binding member 300 will be disengaged from each other even if the secondary battery 100 is subjected to fluctuations or vibrations. In this respect, the binding member 300 of FIG. 6 greatly improves the stability of the electrical connection made by the direct connection of the binding member 300 when a plurality of secondary batteries 100 constitute a module or pack.

In the exemplary embodiment of FIG. 6, the plurality of secondary batteries 100 can be connected one after another along the width direction W, so the plurality of secondary batteries 100 must be connected in series to form an electrical circuit. In addition, if the negative terminal 130 of one secondary battery 100 is provided with a female binding member 310, the positive terminal 120 of another adjacent secondary battery 100 should be provided with a male binding member 320. In other words, the terminals of adjacent secondary batteries 100 with different polarities should be provided with binding members 300 with different male/female properties.

Thus, the secondary battery 100 may be configured such that all of the secondary batteries 100 have terminals of the same polarity with binding members 300 having same male and female patterns, as shown in FIG. 7, or, as in the case of FIG. 8, some of the secondary batteries 100 have only female binding members 310 while other secondary batteries 100 have only male binding members 320.

For reference, the binding member 300 of FIG. 6 may also be manufactured as a separate member and bonded to the extension terminal 220, or the binding member 300 may be integrally formed with the extension terminal 220 as shown in the embodiment.

### (Second Embodiment)

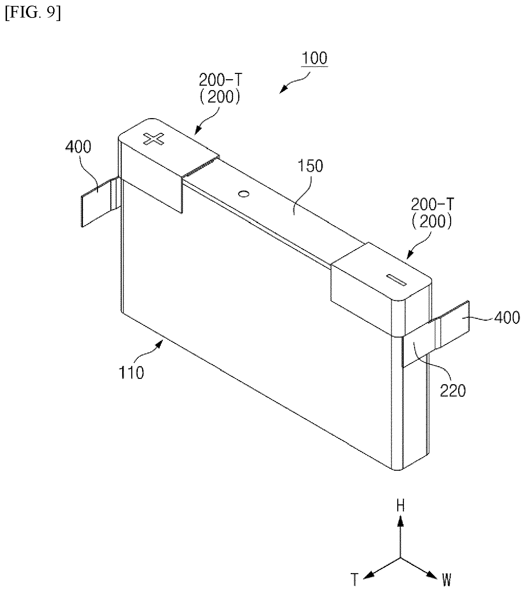

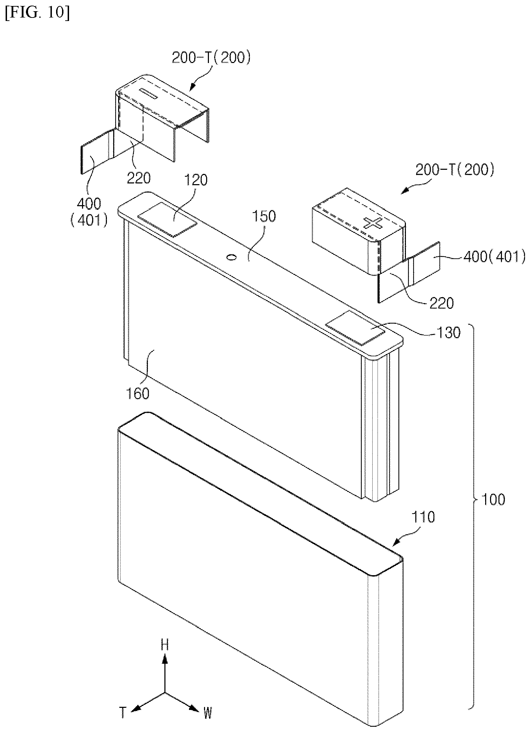

FIG. 9 is a perspective view of the secondary battery 100 according to the present disclosure, and FIG. 10 is a perspective view of a coupled structure of the secondary battery 100 and the T-type terminal structure 200-T according to the present disclosure.

Since the basic structure of the terminal structure 200 is almost the same for the W-type terminal structure 200-W and the T-type terminal structure 200-T, the following description will focus on the characteristic configuration of the T-type terminal structure 200-T.

The T-type terminal structure 200-T includes a connection terminal 400 provided on the extension terminal 220, and the connection terminal 400 extends toward the thickness direction T of the secondary battery 100. The connection terminal 400 refers to an auxiliary terminal or an extended terminal that is electrically connected to the extension terminal 220 or the connection terminal 400 of another adjacent secondary battery 100.

The connection terminal 400 is electrically connected to the extension terminal 220 of the terminal structure 200. For example, as shown, the connection terminal 400 may be integrally formed with the extension terminal 220, or, although not shown, a separately manufactured connection terminal 400 may be bonded to the extension terminal 220.

The connection terminal 400 extends in the thickness direction T of the secondary battery 100, and a plurality of secondary batteries aligned in the thickness direction T can be electrically connected by such connection terminal 400. In this sense, the terminal structure 200 of the second embodiment is referred to as a T-type terminal structure 200-T.

As such, by providing the connection terminal 400 on the terminal structure 200, it is possible to connect the terminal structure 200 in the thickness direction T, so that a plurality of secondary batteries 100 can be electrically connected to each other by directly connecting them through the connection terminal 400 without a separate busbar, thereby simplifying the structure and reducing the manufacturing cost when manufacturing a battery module or pack.

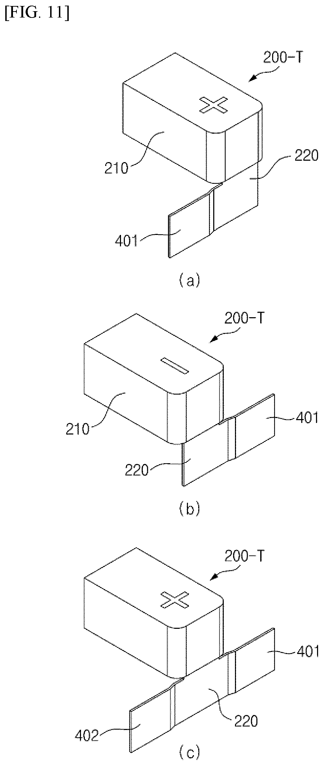

FIG. 11 is a diagram illustrating various embodiments of the connection terminal 400, with three exemplary embodiments shown.

The connection terminal 400 provided in the T-type terminal structure 200-T of the second embodiment extends along the thickness direction T of the secondary battery 100, and may be a unidirectional connection terminal 401 extending in only one direction (+T direction or -T direction) of the thickness direction T, as shown in (a) and (b) of FIG. 11, or a bidirectional connection terminal 402 extending in both directions (+T direction and -T direction), as shown in (c).

And, although the extension length of the connection terminal 400 is difficult to be defined uniformly, it can be said that it is necessary to have a length that can be reliably joined to the extension terminal 220 or the connection terminal 400 on the terminal structure 200 of another secondary battery 100 immediately adjacent in the thickness direction T of the secondary battery 100.

As described above, the connection terminal 400 is intended to electrically connect a plurality of secondary batteries 100 without a separate busbar by being electrically connected to an extension terminal 220 or connection terminal 400 of another secondary battery 100 that is adjacent to it in the thickness direction T. The various embodiments of the connection terminal 400 shown in FIG. 11 may be applied in various combinations for various electrical connections.

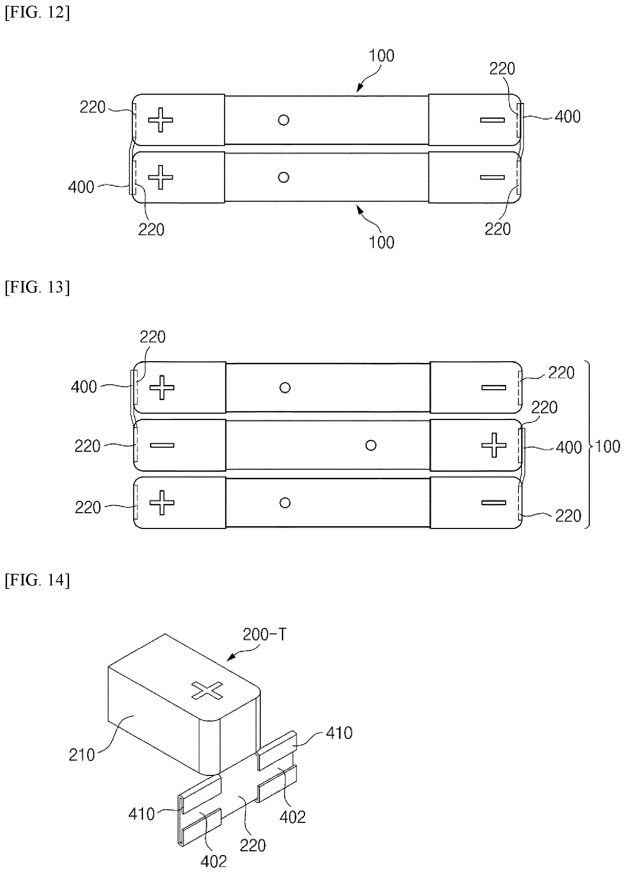

FIG. 12 is a diagram illustrating a structure in which two secondary batteries 100 are connected in parallel via a connection terminal 400. The two secondary batteries 100 adjacent in the thickness direction T are each equipped with a T-type terminal structure 200-T at the positive terminal 120 and the negative terminal 130, and the two secondary batteries 100 are aligned so that the polarity of the terminals facing each other is the same.

In this way, a plurality of secondary batteries 100 arranged along a thickness direction T with electrode terminals 120 or 130 of the same polarity facing each other form a parallel circuit by connecting adjacent terminal structures 200 via a T-type terminal structure 200-T.

FIG. 12 illustrates an embodiment in which the unidirectional connection terminal 401 and the extension terminal 220 are connected to each other, and although the secondary battery 100 is illustrated as two, such parallel connections may be made in succession in the same pattern.

FIG. 13 is a diagram illustrating a structure in which three secondary batteries 100 are connected in series via a connection terminal 400. Two of the three secondary batteries 100 adjacent in the thickness direction T have T-type terminal structures 200-T on the positive terminal 120 and negative terminal 130, respectively, and the three secondary batteries 100 are arranged so that the polarities of the terminal of the secondary batteries 100 facing each other are opposite.

Since the polarity of the terminals of the secondary batteries 100 facing each other is opposite, a series circuit is formed by connecting the connecting terminals 400 between the adjacent terminal structures 200. However, as shown in FIG. 12, the connection of the connection terminals 400 should be made only on one side of the facing secondary batteries 100, and alternately while moving the secondary battery 100 one by one.

In this way, a plurality of secondary batteries 100 can be connected in parallel or in series by connecting the connection terminal 400 by aligning the plurality of secondary batteries 100 in the thickness direction T and aligning so that the polarity of the electrode terminals 120, 130 to match the desired circuit connection.

Meanwhile, FIG. 14 is a diagram illustrating of another example of a connection terminal 400 according to the second embodiment of the present disclosure.

The exemplary embodiment of FIG. 14 is the same as described above that the plurality of secondary batteries 100 can be directly connected using the connection terminals 400 along the thickness direction T, but there is a difference in the structure of interconnecting the connection terminals 400.

In the exemplary embodiment shown in FIGS. 9 to 13, the connection terminal 400 provided on the T-type terminal structure 200-T extends to a length that can be bonded to an extension terminal 220 or connection terminal 400 on the terminal structure 200 of another immediately adjacent secondary battery 100 in the thickness direction T, and does not include a special structure for bonding the connection terminal 400.

In comparison, in the exemplary embodiment of FIG. 14, the end of one connection terminal 400 forms a slot 410 that is open in the thickness direction T. Correspondingly, the connection terminal 400 of another secondary battery 100 that is adjacent in the thickness direction T can be inserted into the slot 410.

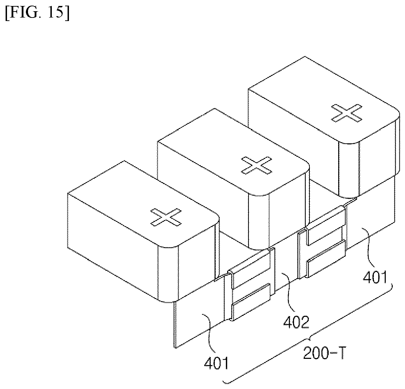

FIG. 15 is a diagram exemplifying a structure in which a plurality of secondary batteries 100 are electrically connected using the connection terminal 400 of FIG. 14. In FIG. 15, three secondary batteries 100 are shown, wherein the T-type terminal structure 200-T of the secondary battery 100 located at the center is provided with a bidirectional connection terminal 402 corresponding to (c) of FIG. 11, and a slot 410 is formed at both ends of the bidirectional connection terminal 402. Correspondingly, the secondary batteries 100 on both sides are provided with simple unidirectional connection terminals 401 without slots 410, and two unidirectional connection terminals 401 are interconnected by being inserted into the slots 410 of the bidirectional connection terminals 402 respectively.

As such, according to the exemplary embodiment of FIG. 14, the connection terminals 400 of the T-type terminal structure 200-T form a slot structure, which facilitates mutual coupling and electrical connection of the plurality of secondary batteries 100. In other words, in the exemplary embodiments of FIGS. 9 to 13, the electrical connection between the plurality of secondary batteries 100 is completed only by bonding between the connection terminals 400, but in the exemplary embodiment of FIG. 14, the connection terminals 400 can be firmly contacted through the slot structure, so that the electrical connection can be made even in the assembled state.

Of course, even in the slot structure of the exemplary embodiment of FIG. 14, it is possible to connect the connection terminals 400 in a kind of prefabricated state using the slot 410, and then complete the connection more firmly by welding or other bonding processes.

### (Third Embodiment)

In the first embodiment, a W-type terminal structure 200-W is described, and in the second embodiment, a T-type terminal structure 200-T is described. As described above, the W-type terminal structure 200-W allows a plurality of secondary batteries 100 to be connected in series, and the T-type terminal structure 200-T allows a plurality of secondary batteries 100 to be connected in series or in parallel.

The third embodiment describes connecting a plurality of secondary batteries 100 in series and parallel. Here, since only a series connection is possible with the W-type terminal structure 200-W, a series and parallel connection can be realized using the W-type terminal structure 200-W and the T-type terminal structure 200-T, or using the T-type terminal structure 200-T alone.

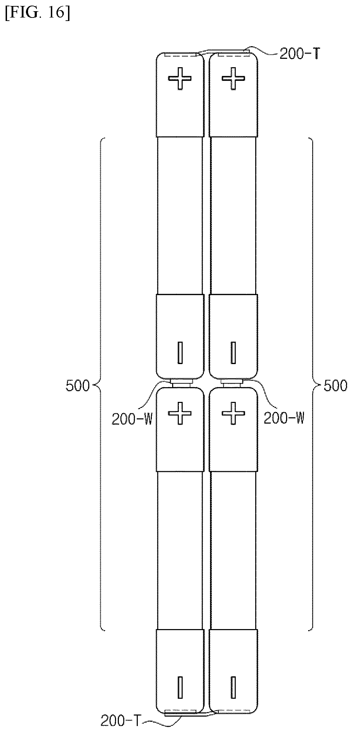

FIG. 16 illustrates an example of connecting a plurality of secondary batteries 100 in series and parallel using a W-type terminal structure 200-W and a T-type terminal structure 200-T.

There is a plurality of series battery groups 500 in which a plurality of secondary batteries 100 arranged in the width direction W are connected in series by a binding member 300 of the W-type terminal structure 200-W, and the secondary battery 100 located at the outermost edge of the series battery group 500 has a positive or negative polarity. That is, each series battery group 500 is equivalent to one large secondary battery 100 with an increased capacity, proportional to the number of secondary batteries 100 directly connected to it.

This plurality of series battery groups 500 are aligned along the thickness direction T, and similar to the parallel connection in FIG. 12, the secondary battery 100 located at the outermost of the series battery groups 500 is connected in parallel by the connection terminals 400 of the T-type terminal structure 200-T, thereby forming a series-parallel connection of the W-type terminal structure 200-W and the T-type terminal structure 200-T combined.

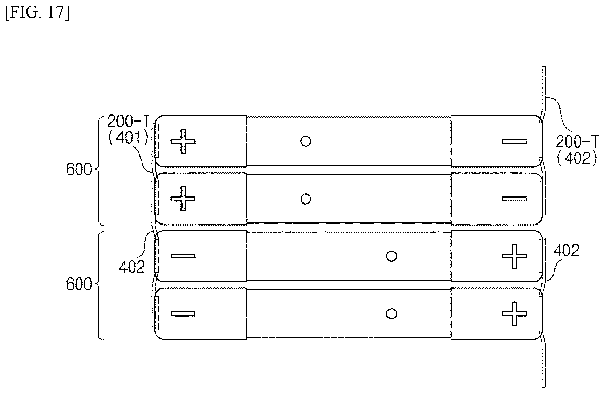

FIG. 17 illustrates an example of a series parallel connection using only the T-type terminal structure 200-T.

Specifically, the plurality of secondary batteries 100 arranged in the thickness direction T includes a plurality of parallel battery groups 600 connected in parallel by the connection terminal 400 of the T-type terminal structure 200-T. The parallel connection by the T-type terminal structure 200-T follows the embodiment of FIG. 12.

In addition, between the plurality of parallel battery groups 600, the different polarities of the parallel battery groups 600 are connected by the connection terminals 400 of the T-type terminal structure 200-T, as shown in the embodiment of FIG. 13, so that the plurality of secondary batteries 100 form a single serial-parallel connection.

Here, although not shown, the plurality of secondary batteries 100 connected in a single circuit are connected in series to a busbar, and the connection to the busbar may be made using a W-type terminal structure 200-W or a T-type terminal structure 200-T, depending on a pre-established coupling strategy.

Furthermore, FIGS. 16 and 17 illustrate one example of a series connection using a W-type terminal structure 200-W and a T-type terminal structure 200-T, although it is possible to connect more secondary batteries 100 in more complex serial-parallel circuits.

The present disclosure has been described above in more detail through the drawings and embodiments. However, the configurations described in the drawings or the embodiments in the specification are merely embodiments of the present disclosure and do not represent all the technical ideas of the present disclosure. Thus, it is to be understood that there may be various equivalents and variations in place of them at the time of filing the present application.

### [Reference numerals]

100: SECONDARY BATTERY
110: BATTERY CASE
120: POSITIVE TERMINAL
130: NEGATIVE TERMINAL
140: VENTING PORTION
150: CAP PLATE
160: ELECTRODE ASSEMBLY
200: TERMINAL STRUCTURE
200-W: W-TYPE TERMINAL STRUCTURE
200-T: T-TYPE TERMINAL STRUCTURE
210: TERMINAL BODY
220: EXTENSION TERMINAL
230: EXTENSION WIRE
300: BINDING MEMBER
310: FEMALE BINDING MEMBER
312: GROOVE
314: SLOT
320: MALE BINDING MEMBER
322: PROTRUSION
324: INSERT
400: CONNECTION TERMINAL
401: UNIDIRECTIONAL CONNECTION TERMINAL
402: BIDIRECTIONAL CONNECTION TERMINAL
410: SLOT
500: SERIES BATTERY GROUP
600: PARALLEL BATTERY GROUP
W: WIDTH DIRECTION
T: THICKNESS DIRECTION
H: HEIGHT DIRECTION

## Claims

1. A secondary battery, comprising:
an electrode assembly;
a battery case;
a positive terminal and a negative terminal spaced apart on a top surface of the battery case; and
at least one of a W-type terminal structure and a T-type terminal structure,
wherein the W-type terminal structure is a structure capable of connecting two secondary batteries in a width direction, the W-type terminal structure comprising a first terminal body coupled to the top surface of the battery case and one or more faces extending from the top surface while covering the positive or negative terminal, and a first extension terminal electrically connected to the positive or negative terminal and exposed on any one side of the terminal body other than the top surface, and having a binding member on the first extension terminal, and
wherein the T-type terminal structure is a structure capable of connecting two secondary batteries in a thickness direction, the T-type terminal structure comprising a second terminal body coupled to the top surface of the battery case and one or more faces extending from the top surface while covering the positive or negative terminal, and a second extension terminal electrically connected to the positive or negative terminals and exposed on any one side of the terminal body other than the top surface, and having a connection terminal facing the thickness direction of the secondary battery on the second extension terminal.

2. The secondary battery of claim 1, wherein the first extension terminal or second extension terminal is electrically connected to the positive terminal or negative terminal by an extension wire, which is insulated from outside.

3. The secondary battery of claim 1, wherein the first terminal body or the second terminal body is coupled to the top surface of the battery case and a side surface extending from the top surface, and
wherein the first extension terminal or the second extension terminal is exposed on the side surface.

4. The secondary battery of claim 1, wherein the binding member is a male binding member or a female binding member having a shape complementary to the male binding member provided on the first extension terminal.

5. The secondary battery of claim 4, wherein the male binding member or the female binding member provided on the first extension terminal is configured to bound in series circuit to a female binding member or a male binding member of another adjacent secondary battery.

6. The secondary battery of claim 5, wherein the secondary battery and the another adjacent secondary battery are aligned in the width direction, and
wherein the male binding member and the female binding member provided in the secondary battery and the another adjacent secondary battery are coupled along the width direction.

7. The secondary battery of claim 5, wherein:
the female binding member comprises a groove open in the width direction, and
the male binding member comprises a protrusion projecting in the width direction.

8. The secondary battery of claim 5, wherein the secondary battery and the another adjacent battery are aligned in the width direction, and
wherein the male binding member and the female binding member provided in the secondary battery and the another adjacent secondary battery are coupled along a height direction of the secondary battery.

9. The secondary battery of claim 8, wherein:
the female binding member comprises a slot open in the height direction, and
the male binding member comprises an insert extended in the height direction.

10. The secondary battery of claim 4, wherein the connection terminal extends in one or both directions along the thickness direction.

11. The secondary battery of claim 10, wherein the connection terminal on the second extension terminal is configured to electrically connect to a second extension terminal or connection terminal of another adjacent secondary battery.

12. The secondary battery of claim 11, wherein the secondary battery and the another adjacent secondary battery are aligned in the thickness direction, and
wherein the connection terminal provided on the secondary battery is connected in series or parallel to a second extension terminal or connection terminal of the another adjacent secondary battery.

13. The secondary battery of claim 10, wherein an end of the connection terminal forms a slot open in the thickness direction.

14. The secondary battery of claim 13, wherein the slot of the connection terminal is configured to be electrically connected by inserting a connection terminal of an another adjacent secondary battery into the slot.

15. The secondary battery of claim 11, wherein the secondary battery comprises a plurality of secondary batteries arranged in the width direction, which are provided with a plurality of series battery groups connected in series by the binding members of the W-type terminal structure, and
wherein the secondary batteries located at the outermost edge of the plurality of series battery groups are connected in parallel by the connection terminal of the T-type terminal structure.

16. The secondary battery of claim 11, wherein the secondary battery comprises a plurality of secondary batteries arranged in the thickness direction, which are provided with a plurality of parallel battery groups connected in parallel by the connection terminal of the T-type terminal structure, and
wherein the plurality of parallel battery groups are connected in parallel by the connection terminal of the T-type terminal structure.
